# EUROPÄISCHE PATENTSCHRIFT

(11) **EP 3 239 882 B1**
(45) Veröffentlichungstag und Bekanntmachung des Hinweises auf die Patenterteilung: **11.11.2020**
(21) Anmeldenummer: 16166997.3
(22) Anmeldetag: 26.04.2016
(51) Int. Cl.: G06F 21/44, G06F 21/12, G06F 21/64, G06F 21/62

(54) **ZUGRIFF AUF EINE PROTOKOLLDATEI**
ACCESSING A LOG FILE
ACCÈS À UN FICHIER DE PROTOCOLE

(43) Veröffentlichungstag der Anmeldung: 01.11.2017
(73) Patentinhaber: Deutsche Telekom AG, 53113 Bonn (DE)
(72) Erfinder: Drick, Timo, 60385 Frankfurt (DE); Müller-Jung, Marcus, 47259 Duisburg (DE); Wang, Hao, 53175 Bonn (DE)
(74) Vertreter: Braun-Dullaeus Pannen Emmerling Patent- & Rechtsanwaltspartnerschaft mbB

(56) Entgegenhaltungen:
- WO-A1-2009/111408
- US-A1- 2013 171 960
- Anonymous: "Tracing (software) - Wikipedia", , 14 April 2016 (2016-04-14), XP055541095, Retrieved from the Internet: URL:https://en.wikipedia.org/w/index.php?t itle=Tracing_(software)&oldid=715206419 [retrieved on 2019-01-11]

## Beschreibung

Die Erfindung betrifft ein Verfahren und ein Endgerät zum Zugriff auf eine Protokolldatei ("Logfile"), die von einer auf einem zu testenden mobilen Endgerät, insbesondere einem Smartphone, laufenden Applikation, insbesondere einer freigegebenen Version der Applikation, erstellt wird.

Bekanntlich enthält ein solches Logfile ein Protokoll, das eine Applikation auf einem Gerät automatisch erstellt. In diesem Protokoll können Aktionen protokolliert werden, die für eine Untersuchung des korrekten Ablaufes der Applikation erforderlich sind. Insbesondere können in einem "debug log file" Fehler und Fehlermeldungen protokolliert werden, die während des Betriebes der Applikation auftreten. Diese protokollierten Fehler respektive Fehlermeldungen können zur Programmfehlerbeseitigung ("debugging"), herangezogen werden. Darüber hinaus können in einem Logfile Änderungen an den von der Applikation erstellten Datensätzen protokolliert werden.

Eine besondere Rolle spielen solche debug-Logfiles, mithin Dateien mit Fehlerprotokollen, während der Entwicklung und Einführung einer neuen Applikation. Schließlich ist es während der Phase der Einführung bislang nur begrenzt möglich, schon für die Nutzung freigegebene Versionen ("release version") einer Applikation zu testen respektive darin auftretende Fehler zu beseitigen. Das gilt insbesondere, weil diese released Versions meist überhaupt keine zugänglichen Fehlerprotokolle ("debug logs") erstellen respektive aufweisen.

Bislang werden solche released Versions von Applikationen lediglich von einer bestimmten Gruppe ausgewählter Testpersonen auf ein paar wenigen entsprechend eingerichteten Geräten im Rahmen von "end to end" Test getestet. Dazu werden in diesen speziellen Geräten die Fehlerprotokolle der Applikationen aktiviert und nach entsprechender Auslese für die Fehlerbeseitigung genutzt. Dabei ist der Zugang zu den Fehlerprotokollen der Applikationen aus Sicherheitsaspekten besonders heikel, da diese eine Vielzahl sensibler Informationen über die jeweilige Applikation enthalten können.

Aufgabe der Erfindung ist es nunmehr, ein mit einfachen Mitteln umzusetzendes Verfahren und ein entsprechendes Endgerät zu schaffen, um einen komfortablen und sicheren Zugang zu den Fehlerprotokollen von Applikationen, insbesondere von schon eingeführten Applikationen ("released versions") zu schaffen, die auf einer Vielzahl von Smartphones laufen.

Die WO 2009/111408 A1 offenbart eine Vorgehensweise, wie autorisierte Versionen ausfühbarer Programme auf Endgeräten in einer sicherern Umgebung installiert werden können.

Die US 2013/0171960 A1 offenbart eine Verfahrensweise, mit der sich der Gebrauch mobiler Endgeräte bestimmen lässt.

Diese Aufgabe wird durch das Verfahren nach Anspruch 1 und das Endgerät nach Anspruch 5 gelöst. Bevorzugte Ausgestaltungen ergeben sich aus den jeweiligen Unteransprüchen.

Entsprechend der Ansprüche liegt die grundlegende Idee der erfindungsgemäßen Vorgehensweise darin, den Zugriff auf die Protokolldatei enthaltend das Fehlerprotokoll zu ermöglichen, aber über eine geräteindividuelle Verschlüsselung zu verschlüsseln.

Anspruchsgemäß wird das dadurch bewerkstelligt, dass dem Entwickler der Applikation als dem Rechteinhaber an der Applikation zunächst eine eindeutige Gerätekennung des mobilen Testgerätes vom Nutzer des Testgerätes, mithin dem Tester, zur Verfügung gestellt werden. Dabei kann als solche individuelle Gerätekennung die IMEI des mobilen Testgerätes, insbesondere des Smartphones, herhalten. Diese individuelle Gerätekennungen sind bekanntermaßen auf dem Smartphone gespeichert und entsprechend zugänglich. Der Entwickler speichert die Gerätekennung in einer Kennungsdatei ("ID file") und erstellt von der Kennungsdatei eine Signatur mit einem nur ihm bekannten privaten Signaturschlüssel. Der Entwickler übermittelt die Kennungsdatei und die Signatur an das mobile Testgerät, wo sowohl die Kennungsdatei als auch die Signatur gespeichert werden.

Wenn der Nutzer die Applikation auf dem Testgerät aufruft, wird zunächst automatisch das Vorhandensein von Kennungsdatei und Signatur überprüft. Dann verifiziert das mobile Testgerät die Signatur mit einem auf dem mobilen Testgerät gespeicherten öffentlichen Schlüssel. Dabei ermöglicht die Signatur dem Tester, mit Hilfe seines öffentlichen Schlüssels die Urheberschaft und Integrität der Kennungsdatei zu prüfen und damit sicher zu stellen, dass der Absender auch der berechtigte Entwickler ist. Schließlich wird die in der Kennungsdatei befindliche Gerätekennung mit der tatsächlichen Gerätekennung des Testgerätes verglichen und verifiziert. Erst bei erfolgreicher Verifikation wird der Zugriff auf die Protokolldatei gestattet, respektive erst bei erfolgreicher Verifikation erstellt die Applikation eine für den Entwickler zugängliche Protokolldatei.

Mit der erfindungsgemäßen Vorgehensweise wird die individuelle und einzigartige Gerätekennung genutzt, um die Erstellung von Protokolldateien respektive den Zugriff darauf zu ermöglichen. Die Besonderheit bei dieser Vorgehensweise liegt darin, dass die signierte Gerätekennung genutzt wird, um deren Verteilung abzusichern. Damit kann gewährleistet werden, dass lediglich der berechtigte Entwickler Zugriff auf die im mobilen Endgerät von der Applikation erstellte Protokolldatei erhält.

Der besondere Vorteil des Verfahrens liegt darin, dass an "normalen" released versions von Applikationen, also an Applikationen, die schon im Umlauf sind, von autorisierten Personen Tests im Hinblick auf Programmfehler durchgeführt werden können. So kann mit dem Hin und Her der individuellen Gerätekennung und mit der Signatur seitens des Entwicklers der autorisierte Zugriff auf das Fehlerprotokoll gewährleistet werden.

In einer bevorzugten Ausführungsform werden dem Entwickler seitens des Testers eine Vielzahl von Gerätekennungen von entsprechend ausgewählten Testgeräten zur Verfügung stellt. Der Entwickler erstellt, signiert und übermittelt dann dem Tester eine Kennungsdatei enthaltend diese Vielzahl von Gerätekennungen, die der Tester auf den mobilen Testgeräten zusammen mit der Signatur speichert. Auf diese Weise kann die zu testende Applikation an einer Vielzahl von Geräten zeitgleich auf das Vorliegen von Programmfehlern ("Bugs") überprüft und entsprechend "debugt" werden.

Um bei einer solchen Vielzahl von mobilen Endgeräten einfach nachvollziehen zu können, welche Geräte in welchem Unternehmen für die erfindungsgemäße Vorgehensweise freigeschaltet sind, ist es vorteilhaft, wenn die Kennungsdatei und/oder die Signatur mit einem Namen oder einem Namenszusatz bezeichnet wird, der dem Entwickler und/oder dem Tester eindeutig zugeordnet ist. Ein solcher Name kann dem Schema folgen "appname.devices.companyname". Beispielsweise kann der Name "appenabler.devices.dtag" bedeuten, dass es sich um die Applikation "Appenabler" handelt und die Protokolldateien von Testgeräten der Deutschen Telekom betrifft. Der Inhalt der Datei ist die Gerätekennung. Nach einer ähnlichen Systematik kann die übermittelte Signatur bezeichnet werden, wobei dem Namen noch das Kürzel "sig" angehängt sein kann. Entsprechend sähe der Name folgendermaßen aus: "appenabler.devices.dtag.sig". Dementsprechend kann die Kennungsdatei und/oder die Signatur auch mit einem Namenszusatz bezeichnet werden, der der Applikation und den Testgeräten eindeutig zugeordnet ist.

Um einen möglichst großen Bedienkomfort zu gewährleisten ist es anspruchsgemäß vorgesehen, dass die Protokolldatei mit dem von der Applikation erstellten Diagnoseprotokoll seitens des Entwicklers über eine Funkverbindung, insbesondere eine Mobilfunkverbindung zum Smartphone, beliebig abrufbar ist. Um eine sichere Übermittlung der Protokolldatei vom Smartphone an den Entwickler zu gewährleisten ist es darüber hinaus ist es anspruchsgemäß vorgesehen, dass die Protokolldatei vor der Übermittlung seitens des Testgerätes mit dem öffentlichen Schlüssel verschlüsselt und seitens des Entwicklers mit dem privaten Schlüssel entschlüsselt wird.

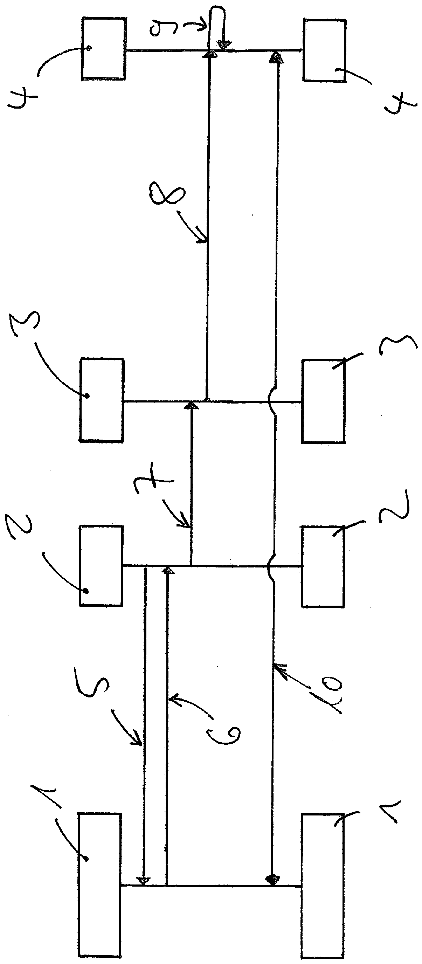

Die Erfindung wird nachfolgend anhand der Figur näher beschrieben. Die Figur zeigt die Schrittfolge der erfindungsgemäßen Vorgehensweise:
Auf der einen Seite steht der Entwickler 1 respektive das die Applikation entwickelnde Unternehmen, das die Rechte an der Urheberschaft der Applikation hat und damit berechtigt ist, den Code der Applikation zu verändern. Auf der anderen Seite steht ein die Applikation testender (1) Nutzer 2 ("Tester"), dem ein mobiles Endgerät, mithin ein Smartphone 3 mit der darauf laufenden Applikation 4 zur Verfügung steht. Die erfindungsgemäße Vorgehensweise zum Zugriff auf das Log File der auf dem zu testenden Smartphone 3 laufenden Applikation 4 in einer schon im Umlauf befindlichen "released vesion" bedient sich der nachfolgenden Schrittfolge:
In einem ersten Schritt 5 übermittelt der Tester 2 dem Entwickler 1 eine eindeutige Gerätekennung, beispielsweise die IMEI, des Smartphones 3. Daraufhin signiert der Entwickler 1 die Gerätekennung mit einem nur ihm zur Verfügung stehenden privaten Signaturschlüssel und schickt in Schritt 6 die Gerätekennung in Form einer Kennungsdatei zusammen mit der Signatur zurück an den Tester 2. Die Kennungsdatei kann eine Vielzahl von Gerätekennungen enthalten, insbesondere die Gerätekennungen aller zu testenden Smartphones. Der Tester 2 speichert daraufhin in Schritt 7 die Kennungsdatei zusammen mit der Signatur auf dem zu testenden Smartphone 3. Die Speicherung kann automatisch geschehen, wenn der der Entwickler die Kennungsdatei und die Signatur über eine Datenleitung, beispielsweise das Internet und/oder ein Mobilfunknetz, unmittelbar an die Adresse des Smartphones gesandt hat.

Wenn nun der Tester 2 auf die Applikation zugreift, untersucht diese zunächst, ob Kennungsdatei und Signatur auf dem Smartphone überhaupt vorhanden sind (Schritt 8). Dann wird die Signatur in einem Verifikationsschritt 9 anhand eines auf dem Smartphone befindlichen öffentlichen Schlüssels daraufhin überprüft, ob sie und damit die Kennungsdatei von dem berechtigten Entwickler stammen. Zudem wird überprüft, ob die Kennungsdatei auch die Gerätekennung des Smartphones enthält, die bei diesem Schritt vom Smartphone abgerufen wird. Bei erfolgreicher Verifikation wird dann der Zugriff des berechtigten Entwicklers 1 auf die von der Applikation geführten Protokolldatei erlaubt (Schritt 10).

Auf dem zur Durchführung des Verfahrens geeigneten Smartphone 3 läuft entsprechend eine Applikation 4, die zur Aufzeichnung einer Protokolldatei auf dem Smartphone 3 befähigt ist. Die von dem Entwickler 1 der Applikation 4 erstellte Kennungsdatei enthält die eindeutige Gerätekennung des Smartphones 3, die ihm vom Tester 2, der Verfügungsgewalt über das Smartphone hat, zur Verfügung gestellt wurde. Der Kennungsdatei ist eine Signatur zugeordnet, die vom Entwickler erstellt wurde und die bei Aufruf der Applikation mit einem im Smartphone gespeicherten öffentlichen Schlüssel verifizierbar ist. Dazu sind im Smartphone Mittel vorhanden, die bei verifizierter Kennungsdatei und bei übereinstimmender Gerätekennung eine Protokolldatei erstellen und auf dem Testgerät speichern und/oder die den Zugriff auf die von der Applikation erstellten Protokolldatei zulassen.

## Patentansprüche

1. Verfahren zum Zugriff auf eine Protokolldatei, die von einer auf
einem zu testenden mobilen Endgerät (3) laufenden Applikation (4) erstellt wird, **dadurch gekennzeichnet,**
**dass** dem Entwickler (1) der Applikation (4) eine eindeutige Gerätekennung des mobilen Endgerätes (3) vom einem Tester zur Verfügung gestellt wird,
**dass** der Entwickler (1) die Gerätekennung in einer Kennungsdatei speichert und von der Kennungsdatei mit einem privaten Signaturschlüssel eine Signatur erstellt,
**dass** der Entwickler (1) die Kennungsdatei und die Signatur an das mobile Endgerät (3) übermittelt,
**dass** die Kennungsdatei und die Signatur auf dem mobilen Endgerät (3) gespeichert werden,
**dass** beim Aufruf der Applikation (4) die Signatur mit einem auf dem mobilen Endgerät (3) befindlichen öffentlichen Schlüssel und die in der Kennungsdatei befindliche Gerätekennung mit der des mobilen Endgerätes (3) verifiziert wird, und
**dass** bei erfolgreicher Verifikation eine für den Entwickler zugängliche Protokolldatei erstellt wird, und wobei die Protokolldatei enthaltend ein Diagnoseprotokoll vom Entwickler über eine Funkverbindung abrufbar ist und dass
die Protokolldatei vor der Übermittelung seitens des mobilen Endgerätes (3) mit dem öffentlichen Schlüssel verschlüsselt und seitens des Entwicklers (1) mit dem privaten Schlüssel entschlüsselt wird.

2. Verfahren nach Anspruch 1,
**dadurch gekennzeichnet, dass**
ein Tester (2) dem Entwickler (1) eine Vielzahl von Gerätekennungen entsprechend ausgewählter mobiler Endgeräte (3) zur Verfügung stellt und der
Entwickler (1) dem Tester (2) eine Kennungsdatei enthaltend die Vielzahl von Gerätekennungen übermittelt, wobei der Tester (2) die Kennungsdatei auf den mobilen Endgeräten (1) zusammen mit der Signatur speichert.

3. Verfahren nach Anspruch 1 oder 2,
**dadurch gekennzeichnet, dass**
die Kennungsdatei und/oder die Signatur mit einem Namenszusatz bezeichnet wird, der dem Entwickler (1) eindeutig zugeordnet ist.

4. Verfahren nach Anspruch 3,
**dadurch gekennzeichnet, dass**
die Kennungsdatei und/oder die Signatur mit einem Namenszusatz bezeichnet wird, der der Applikation (4) und den mobilen Endgeräten (3) eindeutig zugeordnet ist.

5. Mobiles Endgerät zur Verwendung in dem Verfahren nach einem der vorherigen Ansprüche,
aufweisend eine Applikation (4), die zur Aufzeichnung einer Protokolldatei auf dem mobilen Endgerät (3) befähigt ist, **gekennzeichnet durch**
eine von einem Entwickler (1) der Applikation (4) erstellte Kennungsdatei enthaltend eine eindeutige Gerätekennung des mobilen Endgerätes (3),
wobei der Kennungsdatei eine Signatur zugeordnet ist, die bei Aufruf der Applikation (4) mit einem im mobilen Endgerät (3) gespeicherten öffentlichen Schlüssel verifizierbar ist,
wobei Mittel vorhanden sind, die bei verifizierter Kennungsdatei und bei übereinstimmender Gerätekennung eine für den Entwickler zugängliche Protokolldatei erstellen und auf dem mobilen Endgerät (3) speichern,
wobei Mittel vorhanden sind zur Verschlüsselung der Protokolldatei mit dem
öffentlichen Schlüssel und zur Versendung der verschlüsselten Protokolldatei über eine Funkverbindung an den Entwickler.

## Claims

1. A method for accessing a log file that is created by an application (4) running on a mobile terminal (3) to be tested,
**characterized in**
**that** the developer (1) of the application (4) is provided with a unique device identifier of the mobile terminal (3) by a tester,
**that** the developer (1) stores the device identifier in an identification file and creates a signature from the identification file using a private signature key,
**that** the developer (1) transmits the identification file and the signature to the mobile terminal (3),
**that** the identification file and the signature are stored on the mobile terminal (3),
**that** when the application (4) is invoked, the signature is verified with a public key located on the mobile terminal (3) and the device identifier in the identification file is verified with that of the mobile terminal (3), and
**that** if the verification is successful, a log file that is accessible to the developer is created, and wherein
the log file containing a diagnostic log can be retrieved by the developer via a radio connection and that
the log file is encrypted with the public key by the mobile terminal (3) before transmission and decrypted by the developer (1) with the private key.

2. The method according to Claim 1,
**characterized in that**
a tester (2) provides the developer (1) with a plurality of device identifiers corresponding to selected mobile terminals (3) and the developer (1) transmits an identification file containing the plurality of device identifiers to the tester (2), wherein the tester (2) stores the identification file on the mobile terminals (1) together with the signature.

3. The method according to Claim 1 or 2,
**characterized in that**
the identification file and/or the signature is designated by a name extension that is uniquely assigned to the developer (1).

4. The method according to Claim 3,
**characterized in that**
the identification file and/or the signature is designated by a name extension that is uniquely assigned to the application (4) and the mobile terminals (3).

5. A mobile terminal for use in the method according to any one of the preceding claims,
having an application (4) which is capable of recording a log file on the mobile terminal (3),
**characterized by**
an identification file created by a developer (1) of the application (4) and containing a unique device identifier of the mobile terminal (3),
wherein the identification file is assigned a signature that can be verified with a public key stored in the mobile terminal (3) when the application (4) is invoked,
wherein means are provided which, when the identification file is verified and the device ID matches, create a log file that is accessible to the developer and store it on the mobile terminal (3),
wherein means are provided for encrypting the log file with the public key and for sending the encrypted log file to the developer via a radio connection.

## Revendications

1. Procédure d'accès à un fichier journal, qui est créé par une application (4) s'exécutant sur un appareil mobile à tester (3),
**caractérisée**
**en ce que** le développeur (1) de l'application (4) se voit mettre à disposition un identifiant d'appareil unique du terminal mobile (3) par un testeur,
**en ce que** le développeur (1) mémorise l'identifiant de l'appareil dans un fichier d'identification et crée une signature à partir du fichier d'identification avec une clé de signature privée,
**en ce que** le développeur (1) transmet le fichier d'identification et la signature au terminal mobile (3),
**en ce que** le fichier d'identification et la signature sont mémorisés sur le terminal mobile (3)
de sorte que lors de l'appel de l'application (4), la signature est vérifiée avec une clé publique se trouvant sur le terminal mobile (3) et l'identifiant d'appareil se trouvant dans le fichier d'identification avec celui du terminal mobile(3), et
en cas de vérification réussie, un fichier journal accessible au développeur est créé et
le fichier journal contenant un journal de diagnostic peut être appelé par un développeur via la connexion radio et que
le fichier journal avant la transmission du côté du terminal mobile (3) est crypté avec la clé publique et décrypté par le développeur (1) avec la clé privée.

2. Procédé selon la revendication 1,
**caractérisé en ce qu'**
un testeur (2) met à disposition du développeur (1) un grand nombre d'identifiants de dispositif en fonction des terminaux mobiles sélectionnés (3) et le développeur (1) transmet au testeur (2) un fichier d'identification contenant la pluralité d'identifiants d'appareil, dans lequel le testeur (2) mémorise le fichier d'identifiant sur les terminaux mobiles (1) conjointement à la signature.

3. Procédé selon la revendication 1 ou 2,
**caractérisé en ce que**
le fichier d'identification et/ou la signature est identifié par un suffixe de nom qui est uniquement attribué au développeur (1).

4. Procédé selon la revendication 3,
**caractérisé en ce que**
le fichier d'identification et/ou la signature est identifié par un suffixe de nom, qui est attribué de manière univoque à l'application (4) et aux terminaux mobiles (3).

5. Terminal mobile à utiliser dans le cadre du procédé selon une des revendications précédentes,
présentant une application (4) qui est utilisée pour enregistrer un fichier de journal sur le terminal mobile (3),
**caractérisé par**
un fichier identifiant créé par un développeur (1) de l'application (4) contenant un identifiant d'appareil unique du terminal mobile (3),
dans lequel le fichier de signature se voit attribuer une signature qui, lors de l'appel de l'application (4), peut être vérifiée avec une clé publique mémorisée dans le terminal mobile (3),
dans lequel des moyens sont présents, qui dans le cas d'un fichier d'identification vérifié et d'une identification d'appareil correspondante, créent un fichier journal accessible au développeur et le mémorisent sur le terminal mobile (3),
dans lequel des moyens sont présents pour crypter le fichier journal avec la clé publique et pour envoyer le fichier journal crypté au développeur via une liaison radio.
